# EUROPEAN PATENT APPLICATION

(11) **EP 2 404 752 A1**
(43) Date of publication of application: **11.01.2012**
(21) Application number: 10748804.1
(22) Date of filing: 04.03.2010
(51) Int. Cl.: B32B 7/02, B32B 17/10, B32B 27/18, C03C 27/12

(54) **HEAT-RAY-SHIELDING LAMINATE, AND HEAT-RAY-SHIELDING LAMINATED GLASS**

(30) Priority: 06.03.2009 JP 2009052909
(71) Applicant: Bridgestone Corporation, Tokyo 104-8340 (JP)
(72) Inventor: HASHIMOTO Masao, Yokohama-shi Kanagawa 244-8510 (JP); KUWANO Koji, Yokohama-shi Kanagawa 244-8510 (JP)
(74) Representative: Lamb, Martin John Carstairs
(86) International application number: PCT/JP2010/053519
(87) International publication number: WO 2010/101211

(57) **Abstract**

The object of the present invention is to provide a solar control laminate including tungsten oxide as a solar control agent, in which deterioration by discoloration is suppressed in spite of the inclusion of tungsten oxide. The solar control laminate of the invention includes a solar control layer comprising tungsten oxide and/or composite tungsten oxide and at least one adhesive resin layer, and the adhesive resin layer includes an ultraviolet absorber, a light stabilizer and adhesive resin, and the adhesive resin layer has light transmittance of not more than 10% at wavelength of 380nm.

## Description

### Field of the invention

The present invention relates to a laminate comprising a solar control layer suitably used in a laminated glass, the laminate having excellent impact resistance, penetration resistance (resistance to passing through) and security (prevention of crimes).

### Description of the Related Art

As a glass used in automobile, especially windshield, a laminated glass having a structure that two glass plates are bonded through a transparent adhesive resin layer (intermediate layer) is generally employed. The transparent adhesive resin layer is formed from, for example, PVB (polyvinyl butyral) or EVA (ethylene/vinyl acetate copolymer), and the use of the transparent adhesive resin layer enhances penetration resistance of the laminated glass. If external impact is given to the laminated glass, the transparent adhesive resin layer prevents pieces of the glass broken by the impact from scattering because the layer adheres to the pieces of the broken glass. Even if the laminated glass for automobile is destroyed for the purpose of robbery or invasion, the window of the laminated glass cannot be opened. Hence, the laminated glass is useful as glass for prevention of crimes.

In contrast, side windows (side glasses) such as door glass and a glass inserted in window in automobile are scarcely destroyed due to traffic accident, and therefore the glasses do not need such excellent penetration resistance as the above-mentioned laminated glass has. As a result, for the door glass, one glass plate consisting of slightly reinforcing glass has been employed. However, the use of only such a glass plate in the door glass brings about the following disadvantages:
(1) the glass is poor in impact resistance and penetration resistance (passing through resistance) compared with the laminated glass;
(2) if the glass is destroyed for the purpose of robbery or invasion, it turns into many pieces of the glass to permit window to open.
Therefore, it is also now under investigation to use a glass having characteristics of the above-mentioned laminated glass for the side window of an automobile (e.g. a door glass or inserted glass).
As the laminated glass suitable for the above-mentioned use, Patent Document 1 and Patent Document 2 describe a film-reinforced glass in which a plastic film is bonded onto a glass plate through a transparent adhesive layer.

The transparent adhesive resin layer for bonding two glass plates of the laminated glass with each other or for bonding the glass plate of the film-reinforced glass to the plastic film has been required to have excellent adhesion property and impact resistance as mentioned above.

Though the laminated glass generally has excellent adhesion property and impact resistance and hence excellent security, it is not taken into account with respect to solar control property (heat-ray shielding property). As a glass having solar control property, for example, a heat-ray cut glass is commercially available. The heat-ray cut glass consists of a glass plate and a multi-layered coating of metal/metal oxide provided thereon, which is prepared by vapor deposition or sputtering of metal or the like, for the purpose of direct shielding of sunlight. However, the multi-layered coating shows poor abrasion-resistance and inferior chemical resistance. In the heat-ray cut glass, for instance, an intermediate layer made up of EVA or the like is generally superposed on the glass to form a laminated glass.

The heat-ray cut glass is prepared by using a metal, and therefore has the disadvantages such as reduction of transparency, inhibition of transparency of electromagnetic wave and adverse effect on communication function (e.g., cell phone, car navigation). Further, the heat-ray cut glass is formed in the form of multi-layered coating, which brings about high cost.

Hence, a laminated glass having an intermediate film including a solar control agent dispersed therein is proposed. For instance, Patent document 3 proposes a laminated glass having an intermediate film comprising a soft resin and tungsten oxide as a solar control agent dispersed in the resin.

Patent Document 1: JP2002-046217 A
Patent Document 2: JP2002-068785 A
Patent document 3: WO2005/087680

### Disclosure of the Invention

### Problem to be solved by the Invention

The laminated glass provided with the intermediate film of Patent document 3 ensures the compatibility between heat-ray cut function and transparency by the use of tungsten oxide as a solar control agent. However, the laminated glass provided with the intermediate film containing tungsten oxide suffers from discoloration (e.g., change in color to blue) when it is used for a long term period.

Thus, the object of the present invention is to provide a solar control laminate including tungsten oxide as a solar control agent, in which deterioration by discoloration is suppressed in spite of the inclusion of tungsten oxide.

### Means for solving problem

Though the tungsten oxide shows excellent effect shielding a heat-ray (near infrared ray), a film using the oxide sometimes displays change of transmittance associated with change in color to blue. This is considered because the film is exposed to sun light for a long time period, for example, due to the outdoor use of the film. In more detail, it is considered that the tungsten oxide is exposed to light, especially ultraviolet rays, for a long time period to deteriorate and generate pentavalent tungsten, and thereby is changed in color to blue.

The further sturdy of the present inventors has revealed that a film containing an ultraviolet absorber for the purpose of suppressing the discoloration is prevented from changing in color to blue, the change being caused by oxidation deterioration of tungsten oxide, but when the film is further used for a long time period, its color occasionally turns to yellow. The cause to generate the yellow discoloration is not apparent. It is considered because the ultraviolet absorber added for the purpose of suppressing the discoloration deteriorates with the passing of time.

As mentioned above, not only the tungsten oxide but also the ultraviolet absorber deteriorate by ultraviolet rays. The present inventors have made various studies in view of these problems, and as a result they have found that the problems are resolved by adding a light stabilizer to the adhesive resin layer comprising the ultraviolet absorber.

Thus, the present invention is provided by a solar control laminate which comprises a solar control layer comprising tungsten oxide and/or composite tungsten oxide and at least one adhesive resin layer,
wherein the adhesive resin layer comprises an ultraviolet absorber, a light stabilizer and adhesive resin, and the adhesive resin layer has light transmittance of not more than 10% at wavelength of 380nm.

### Effect of the Invention

The solar control laminate of the present invention contains a solar control agent (heat-ray shielding agent) consisting of tungsten oxide and therefore is capable of effectively shielding (cutting off) near infrared rays. Further, the solar control laminate is highly prevented from changing in color to blue, the changing being caused by oxidation deterioration of tungsten oxide due to function of the laminate to shield the specific ultraviolet rays, and at the same time, the solar control laminate is prevented from yellowing caused by the deterioration of the ultraviolet absorber due to its long term use because the laminate contains a light stabilizer.

Hence, in the solar control laminate of the invention, heat-ray (near infrared rays) is effectively shielded, and the deterioration caused by discoloration is highly suppressed, and further the excellent transparency is maintained in for a long term period.

### Brief Description of the Drawings

[Fig. 1] Fig. 1 is a schematic section view showing a solar control laminate as one preferable embodiment according to the present invention.
[Fig. 2] Fig. 2 is a schematic section view showing a solar control laminate as another preferable embodiment according to the present invention.
[Fig. 3] Fig. 3 is a schematic section view showing a solar control laminated glass according to the present invention.
[Fig. 4] Fig. 4 is a schematic section view showing a solar control glass according to the present invention.

### Embodiments for Carrying out the Invention

A solar control laminate of the present invention basically has a solar control layer including tungsten oxide and/or composite tungsten oxide and at least one adhesive resin layer.

In the invention, the heat-ray means generally near infrared rays, especially near infrared rays at wavelengths of 780 nm or more, which correspond to rays highly increasing temperature of sun light.

### [Adhesive Resin Layer]

An adhesive resin layer used in the present invention includes an ultraviolet absorber, a light stabilizer and an adhesive resin. The inclusion of the ultraviolet absorber brings about the adhesive resin layer having light transmittance of preferably not more than 5%, more preferably not more than 3%, especially not more than 1%, at wavelength of 380nm. The solar control laminate is highly prevented from changing in color to blue which is caused by oxidation deterioration of (composite) tungsten oxide.

The light stabilizer is capable of trapping harmful radicals generated by exposure to ultraviolet rays to become to stable condition. The adhesive resin layer containing the light stabilizer is highly prevented from yellowing caused by the deterioration of the ultraviolet absorber.

The adhesive resin layer preferably contains the light stabilizer in the amount of 0.05 to 1.0 part by weight, more preferably 0.1 to 0.5 part by weight based on 100 parts by weight of the adhesive resin. As long as the adhesive resin layer contains the light stabilizer in the above-mentioned range, the deterioration of the ultraviolet absorber is highly prevented.

As the light stabilizer, particularly preferred is a hindered amine light stabilizer. The combination of the hindered amine light stabilizer with the ultraviolet absorber exhibits synergetic effect to bring about enhanced prevention of the discoloration of the solar control laminate. Preferred examples of the hindered amine light stabilizer include the following compounds.

Examples of the hindered amine light stabilizer having low molecular include decanedioic acid bis(2,2,6,6-tetramethyl-1(octyloxy)-4-piperidinyl) ester; a mixture consisting of 70 weight % of a reaction product (molecular weight 737) of 1,1-dimethylethylhydroxyperoxide with octane and 30 weight % of polypropylene; bis(1,2,2,6,6-pentamethyl-4- piperidyL)[[3,5-bis(1,1-dimethylethyl)-4-hydroxyphenyl]metyl]butylmalonate (molecular weight 685); bis(1,2,2,6,6-pentamethyl-4-piperidyl)sebacate, methyl-1,2,2,6,6-pentamethyl-4-piperidylsebacate, a mixture (molecular weight 509) consisting of bis(1,2,2,6,6-pentamethyl-4-piperidyl)sebacate and methyl-1,2,2,6,6-pentamethyl-4-piperidylsebacate; bis(2,2,6,6-tetramethyl-4-piperidyl)sebacate (molecular weight 481); tetrakis(2,2,6,6-tetramethyl-4-piperidyl)-1,2,3,4-butantetracarboxylate (molecular weight 791); tetrakis(1,2,2,6,6-pentamethyl-4-piperidyl)-1,2,3,4-butantetracarboxylate (molecular weight 847); a mixture (molecular weight 900) consisting of 2,2,6,6-tetramethyl-4-piperidyl-1,2,3,4-butantetracarboxylate and tridecyl 1,2,3,4-butantetracarboxylate; a mixture (molecular weight 900) consisting of 1,2,2,6,6-pentamethyl-4-piperidyl-1,2,3,4-butantetracarboxylate and tridecyl-1,2,3,4-butantetracarboxylate.

Examples of the hindered amine light stabilizer having high molecular include poly[{6-(1,1,3,3-tetrabutyl)amino-1,3,5-triazine-2,4-diyl}{(2,2,6,6-tetramet hyl-4-piperidyl)imino}hexamethylene{(2,2,6,6-tetramethyl-4-piperidyl)imi no}] (molecular weight 2000 to 3100); polymerized product (molecular weight 3100 to 4000) of succinic acid dimethyl and 4-hydroxy-2,2,6,6-tetramethyl-1-piperidine ethanol; a mixture of N, N', N", N"'-tetrakis(4,6-bis-(butyl-(N-methyl-2,2,6,6-tetramethylpiperidine-4-yl)a mino)-triazine-2-yl)-4,7-diazadecane-1,10-diamine (molecular weight 2286) and the above-mentioned polymerized product of succinic acid dimethyl and 4-hydroxy-2,2,6,6-tetramethyl-1-piperidine ethanol; a polycondensation product (molecular weight 2600 to 3400) of dibutylamine•1,3,5-triazine•N,N'-bis(2,2,6,6-tetramethyl-4-piperidyl)-1,6-hexamet hylene diamine and N-(2,2,6,6-tetramethyl-4-piperidyl)butylamine. The hindered amine light stabilizer can be employed singly or in combination of two or more kinds.

Of these hindered amine light stabilizers, it is preferred to use as the hindered amine light stabilizer bis(1,2,2,6,6-pentamethyl-4-piperidyl)sebacate, methyl-1,2,2,6,6-pentamethyl-4-piperidylsebacate, methyl-4-piperidylsebacate, and bis(2,2,6,6-tetramethyl-4-piperidyl)sebacate.

The adhesive resin layer uses the ultraviolet absorber. The adhesive resin layer preferably contains the ultraviolet absorber in the amount of 0.01 to 2.0 part by weight, especially 0.5 to 2.0 part by weight based on 100 parts by weight of the adhesive resin. Even the adhesive resin layer containing a small amount of the light stabilizer exhibits excellent effect to prevent discoloration.

It is preferred that a weight ratio (L:U) of the light stabilizer (L) to the ultraviolet absorber (U) in the adhesive resin layer is in the range of 1:1 to 1:15, especially 1:5 to 1:10. Thereby enhanced effect to prevent discoloration can be ensured.

Examples of the ultraviolet absorber include benzophenone compounds, triazine compounds, and benzoate compounds. Of these compounds, the benzophenone compounds are preferred because of enhanced prevention of oxidation deterioration of (composite) tungsten oxide.

The benzophenone ultraviolet absorber preferably is a compound represented by the formula (I):

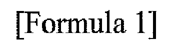

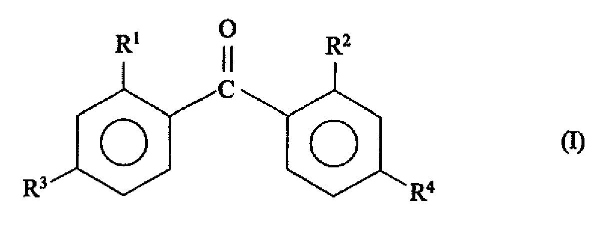

in which R¹ represents a hydroxy group or a hydroxy group, R² represents a hydrogen atom or a hydroxy group, R³ represents a hydrogen atom, a hydroxy group, an alkyl group of 1 to 14 carbon atoms (especially 1 to 8 carbon atoms) or an alkoxy group of 1 to 14 carbon atoms (especially 5 to 8 carbon atoms), and R⁴ represents a hydrogen atom, a hydroxy group, an alkyl group of 1 to 14 carbon atoms (especially 1 to 8 carbon atoms) or an alkoxy group of 1 to 14 carbon atoms (especially 5 to 8 carbon atoms).

R¹ represents preferably a hydroxy group, R² represents preferably a hydrogen atom or a hydroxy group, especially a hydroxy group, R³ represents preferably a hydrogen atom, a hydroxy group, an alkoxy group, especially methoxy or octyloxy, and R⁴ represents preferably a hydrogen atom, a hydroxy group or an alkoxy group, especially methoxy or octyloxy. Particularly it is preferred that both of R¹ and R² represent a hydroxy group, and both R³ and R⁴ represent an alkoxy group of 5 to 8 carbon atoms, especially octyloxy.

Preferred examples of the benzophenone ultraviolet absorber include 2,4-dihydroxybenzophenone, 2-hydroxy-4-methoxybenzophenone, 2-hydroxy-4-dodecyoxybenzophenone, 2-hydroxy-4-n-octylbenzophenone, 2-hydroxy-4-octyloxybenzophenone, 2,2',4,4'-tetrahydroxybenzophenone, and 2,2'-dihydroxy-4,4'-dimethoxybenzophenone. Particularly preferred are 2-hydroxy-4-octyloxybenzophenone and 2,2'-dihydroxy-4,4'-dimethoxybenzophenone. The benzophenone ultraviolet absorber can be employed singly or in combination of two or more kinds.

The adhesive resin layer encompasses an adhesive resin in addition to the above-mentioned light stabilizer and ultraviolet absorber. Examples of the adhesive resin include fluoro resin, silicone resin, olefin resin, acrylic resin, ethylene/vinyl acetate copolymer (EVA), and polyvinyl butyral resin (PVB). EVA and PVB are preferred, especially EVA.

In the ethylene/vinyl acetate copolymer (EVA), the content of vinyl acetate recurring unit preferably is in the range of 23 to 38 parts by weight, especially 23 to 28 parts by weight based on 100 parts by weight of EVA. When the content is less than 23% by weight, the resin cured at high temperature does not show satisfactory transparency. On the other hand, when the content is more than 38 % by weight, the resin is apt to exhibit reduced formability. The ethylene/vinyl acetate copolymer preferably has Melt Flow Index (MFI) of 1.0 to 30.0g/10min., especially 1.5 to 5.0g/10min.

The adhesive resin layer including EVA preferably contains further an organic peroxide as a crosslinker. The adhesive resin layer further can contain various additives such as a crosslinking auxiliary, an adhesion promoter and a plasticizer, if necessary.

In the invention, any organic peroxides that can be decomposed at a temperature of not less than 100°C to generate radical(s) can be employed as the organic peroxide of the invention. The organic peroxide is selected in the consideration of film-forming temperature, condition for preparing the composition, curing (bonding) temperature, heat resistance of body to be bonded, storage stability. Especially, preferred are those having a decomposition temperature of not less than 70°C in a half-life of 10 hours.

Preferred examples of the organic peroxides include t-butylperoxy-2-ethylhexyl monocarbonate, 2,5-dimethylhexane-2,5-dihydroperoxide, 2,5-dimethyl-2,5-(t-butylperoxy)hexane-3-di-t-butylperoxide, t-butylcumyl peroxide, 2,5-dimethyl-2,5-di(t-butylperoxy)hexane, dicumyl peroxide, α,α'-bis(t-butylperoxyisopropyl)benzene, n-butyl-4,4-bis(t-butylperoxy)valerate, 1,1-bis(t-butylperoxy)cyclohexane, 1,1-bis(t-butylperoxy)-3,3,5-trimethylcyclohexane, t-butylperoxybenzoate, benzoyl peroxide, t-butylperoxyacetate, methyl ethyl ketone peroxide, 2,5-dimethylhexyl-2,5-bisperoxybenzoate, butyl hydroperoxide, p-menthane hydroperoxide, p-chlorobenzoyl peroxide, hydroxyheptyl peroxide, chlorohexanone peroxide, octanoyl peroxide, decanoyl peroxide, lauroyl peroxide, cumyl peroxyoctoate, succinic acid peroxide, acetyl peroxide, m-toluoyl peroxide, t-butylperoxyisobutylate and 2,4-dichlorobenzoyl peroxide.

The organic peroxide is preferably contained in the adhesive resin layer in the amount of 1 to 10 part by weight, especially 1 to 5 part by weight based on 100 parts by weight of EVA.

Examples of polyfunctional compounds (crosslinking auxiliaries) include esters of plural acrylic acids or methacrylic acids with polyhydric alcohol such as glycerol, trimethylol propane or pentaerythritol; and further triallyl cyanurate and triallyl isocyanurate.

In the invention, a silane coupling agent can be used for enhancing the adhesive strength of the adhesive resin layer including EVA. Examples of the silane coupling agents include γ-chloropropylmethoxysilane, vinyltriethoxysilane, vinyltris(β-methoxyethoxy)silane, γ-methacryloxypropylmethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropylmethoxysilane, γ-aminopropyltriethoxysilane, N-β-(aminoethyl)-γ-aminopropyltrimethoxysilane. The silane coupling agents can be used singly, or in combination of two or more kinds. The content of the silane coupling agent is preferably in an amount of not more than 5 parts by weight based on 100 parts by weight of EVA.

As the plasticizer, polybasic acid esters and polyhydric alcohol esters are generally employed although the plasticizer can be used without any restriction. Examples of the esters include dioctyl phthalate, dihexyladipate, triethylene glycol-di-2-ethylbutylate, butyl sebacate, tetraethylene glycol diheptanoate and triethylene glycol dipelargonate. The plasticizer can be used singly, or in combination of two or more kinds. The content of the plasticizer is generally in an amount of not more than 5 parts by weight based on 100 parts by weight of EVA.

The adhesive resin layer including EVA preferably contains acryloxy group-containing compounds, methacryloxy group-containing compounds and/or epoxy group-containing compounds for improvement or adjustment of various properties of the layer (e.g., mechanical strength, adhesive property (adhesion), optical characteristics such as transparency, heat resistance, light-resistance, cross-linking rate), particularly for improvement mechanical strength.

Examples of the acryloxy and methacryloxy group containing compounds include generally derivatives of acrylic acid or methacrylic acid, such as esters and amides of acrylic acid or methacrylic acid. Examples of the ester residues include linear alkyl groups (e.g., methyl, ethyl, dodecyl, stearyl and lauryl), a cyclohexyl group, a tetrahydrofurfuryl group, an aminoethyl group, a 2-hydroxyethyl group, a 3-hydroxypropyl group, 3-chloro-2-hydroxypropyl group. Further, examples of the esters include esters of acrylic acid or methacrylic acid with polyhydric alcohol such as ethylene glycol, triethylene glycol, polypropylene glycol, polyethylene glycol, trimethylol propane or pentaerythritol. Example of the amide includes diacetone acrylamide.

Examples of the epoxy group containing compounds include triglycidyl tris(2-hydroxyethyl)isocyanurate, neopentylglycol diglycidyl ether, 1,6-hexanediol diglycidyl ether, allyl glycidyl ether, 2-ethylhexyl glycidyl ether, phenyl glycidyl ether, phenol(ethyleneoxy)₅glycidyl ether, p-tert-butylphenyl glycidyl ether, diglycidyl adipate, diglycidyl phthalate, glycidyl methacrylate and butyl glycidyl ether.

The adhesive resin layer including EVA can be prepared, for example, by mixing a composition including an ultraviolet absorber, a light stabilizer, EVA and if necessary an organic peroxide, etc., and subjecting to a conventional molding process such as extrusion molding or calendaring molding (calendaring ).

The mixing of the composition is preferably carried out by kneading the composition under heating at 40 to 100°C, especially 60 to 90°C. Further, the formation of a film (layer) is preferably carried out at such temperature that the organic peroxide does not have reaction or scarcely has reaction. For example, the temperature is preferably set to the range of 40 to 100°C, especially 60 to 90°C.

Otherwise, the above-mentioned composition including EVA is dissolved in an organic solvent to form a solution, and the resultant solution is applied onto an appropriate substrate by means of an appropriate coater and then dried to form a coating film (i.e., a layer).

### [Solar Control Layer]

The solar control layer used in the solar control laminate of the present invention contains tungsten oxide and/or composite tungsten oxide as a solar control agent. The (composite) tungsten oxide gives excellent solar control (heat-ray cutting off) property to the solar control laminate without reduction of visible light transmission.

The tungsten oxide is generally represented by a general formula W_{y}O_{z} wherein W represents tungsten, O represents oxygen, and y and z satisfy the condition of 2.2≤z/y≤2.999. Further, the composite tungsten oxide has a composition obtained by adding to the tungsten oxide element M (M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I). Hence, free electrons are generated in W_{y}O_{z} even in case of z/y=3, and absorption properties derived from the free electrons develop in the region of near infrared rays, whereby the W_{y}O_{z} is useful as material absorbing near-infrared rays (at approx 1,000nm). In the invention, preferred is composite tungsten oxide.

In the tungsten oxide of the general formula W_{y}O_{z} wherein W represents tungsten and O represents oxygen, the ratio of oxygen to tungsten is preferably less than 3, and further, y and z satisfy the condition of 2.2≤z/y≤2.999. When z/y is not less than 2.2, occurrence of unnecessary WO₂ crystalline phase in near-infrared absorption material can be prevented and the chemical stability of the material can be obtained, whereby the tungsten oxide can be used in effective near-infrared absorption material. In contrast, when z/y is not more than 2.999, free electrons can be generated in the required amount whereby the resultant near-infrared absorbing material has high efficiency.

The composite tungsten oxide is preferably represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3, in view of stability. The alkaline metals are elements in 1st group of Periodical Table of the Elements except for hydrogen, the alkaline-earth metals are elements in 2nd group of Periodical Table of the Elements, and the rare-earth elements are Sc, Y and lanthanide elements. Particularly, from the viewpoint of enhancement of optical properties and weather resistance, M element is preferably one or more element selected from Cs, Rb, K, Tl, In, Ba, Li, Ca, Sr, Fe and Sn.

Further the composite tungsten oxide is preferably treated with a silane coupling agent, whereby the resultant oxide shows excellent dispersing properties and hence brings about excellent near-infrared shielding properties and transparency.

When x/y which represents the addition amount of M is not less than 0.001, free electrons can be generated in a sufficient amount whereby the resultant near-infrared absorbing material shows sufficient solar control effect. The amount of free electrons is increased with increase of the addition amount of the element M, which results in enhancement of solar control effect, but the amount of free electrons is saturated when x/y attains approx. 1. In contrast, when x/y is not more than 1, occurrence of an impurities phase in the solar control layer can be preferably prevented.

Also in the composite tungsten oxide represented by a general formula MₓW_{y}O_{z}, a value of z/y which represents control of oxygen amount functions in the same manner as in the solar control material represented by W_{y}O_{z.} In addition, the free electrons are provided depending on the addition amount of the element M even in case of z/y=3.0, and therefore z/y is preferably 2.2≤z/y≤3.0, more preferably 2.45≤z/y≤3.0.

In case the composite tungsten oxide has crystal structure of hexagonal crystal, the oxide is enhanced in transmission in visual light region and in absorption in near-infrared region.

In case a cation of element M exists in voids of hexagonal shape of the hexagonal crystal by the addition of the element M, the transmission in visual light region and the absorption in near-infrared region are enhanced. In general, the addition of element M having large ion radius brings about the formation of the hexagonal crystal, particularly the addition of Cs, K, Rb, Tl, In, Ba, Sn, Li, Ca, Sr, Fe facilitates the formation of the hexagonal crystal. Naturally it is effective that even an addition element other than the above-mentioned elements exists in voids of the hexagonal shape formed from WO₆ units, and hence the addition element is not restricted to the above-mentioned elements.

In case the composite tungsten oxide having hexagonal crystal has uniform crystal structure, the addition amount of the addition element M is preferably set as a value of x/y to 0.2 to 0.5, more preferably 0.33. It is considered that x/y of 0.33 results in the addition element M being placed in all voids of the hexagonal shape.

Tungsten bronze having tetragonal or cubical crystal besides hexagonal crystal also has solar control effect. The absorption position in near-infrared region is apt to vary depending upon the crystal structures, and the absorption position tends to move in the longer wavelength direction in the order of tetragonal<cubical<hexagonal crystal. With this tendency, the absorption in visual light region is apt to become small in the order of hexagonal<cubical<tetragonal crystal. Therefore, in use (application) that is required to transmit highly visual light and to shield highly near-infrared ray, it is preferred to use tungsten bronze having hexagonal crystal.

In addition, the surface of the tungsten oxide and/or composite tungsten oxide of the invention is preferably coated with oxide containing one or more kind of Si, Ti, Zr and Al for the purpose of enhancement of weather resistance.

The tungsten oxide and/or composite tungsten oxide (fine particles) of the invention is, for example, prepared as follows:

The tungsten oxide represented by a general formula W_{y}O_{z} and/or the composite tungsten oxide represented by a general formula MₓW_{y}O_{z} can be obtained by subjecting as starting material of a tungsten compound to heat treatment under an inert gas or reducing gas atmosphere.

Examples of the starting material of tungsten compound preferably include tungsten trioxide powder, tungsten oxide hydrate, tungsten hexachloride powder, ammonium tungstate powder, tungsten oxide hydrate powder obtained by dissolving tungsten hexachloride in alcohol and drying it, tungsten oxide hydrate powder obtained by dissolving tungsten hexachloride in alcohol, forming precipitation by addition of water and drying the precipitation, tungsten compound powder obtained by drying an ammonium tungstate aqueous solution, and metal tungsten powder, and one or more of the examples can be also used.

In order to facilitate the preparation of the tungsten oxide, it is more preferred to use tungsten oxide hydrate powder or tungsten compound powder obtained by drying an ammonium tungstate aqueous solution. The preparation of composite tungsten oxide is more preferably carried out by using an ammonium tungstate aqueous solution or a tungsten hexachloride solution because the solution of starting material easily enables homogeneous mixing of elements to be used. Thus, the tungsten oxide and/or the composite tungsten oxide having the particle size as below can be obtained by subjecting the above-mentioned material(s) to heat treatment under an inert gas or reducing gas atmosphere.

The composite tungsten oxide represented by a general formula MₓW_{y}O_{z} can be prepared by using a starting material of tungsten oxide containing an element of M or a M-containing compound though in the same manner as the starting material of tungsten oxide of a general formula W_{y}O_{z.} In order to prepare a starting material in which used components are homogeneously mixed in molecular level, solutions of components are preferably mixed with each other. Hence it is preferred that a tungsten compound containing element M is dissolvable in a solvent such as water, or organic solvent. For example, there are mentioned tungstate, chloride, nitrate, sulfate, oxalate or oxide containing element M. However, these are not restricted, and any in the form of solution can be preferably used.

The heat treatment under an inert gas atmosphere is preferably carried out in the condition of 650°C or higher. The starting material heat-treated at 650°C or higher has sufficient coloring power and hence brings about solar control materials having excellent efficiency. Examples of the inert gas include preferably Ar, N₂. Further, the heat treatment under a reducing gas atmosphere is preferably carried out by heating a starting material at temperature of 100 to 650°C under a reducing gas atmosphere and heating at temperature of 650 to 1200°C under an inert gas atmosphere. Example of the reducing gas preferably includes H₂, but is not restricted to. In case H₂ is used as the reducing gas, a composition of the reducing gas has preferably not less than 0.1 % by volume of H₂, more preferably not less than 2% by volume of H₂. Use of not less than 0.1 % by volume of H₂ enables the reduction to effectively promote.

The material powder reduced with hydrogen contains magnelli phase and shows excellent near-infrared shielding properties, and hence the material powder can be used as solar control material without modification. However, since hydrogen contained in tungsten oxide is unstable, its application may be restricted in view of weather resistance. By subjecting the tungsten oxide containing hydrogen to heat treatment at temperature of 650°C or higher under an inert gas atmosphere, further stable solar control material can be obtained. Though the atmosphere in the heat treatment is not restricted, the atmosphere preferably includes N₂ or Ar in view of industrial aspect. The heat treatment at temperature of 650°C or higher brings about formation of magnelli phase in the solar control material whereby weather resistance is enhanced.

The composite tungsten oxide of the invention has been preferably subjected to surface treatment by a coupling agent such as a silane coupling agent, a titanate coupling agent or an aluminum coupling agent. The silane coupling agent is preferred. Thereby the composite tungsten oxide becomes to have excellent compatibility with binder resin, which results in improvement of various properties such as transparency, solar control properties.

Examples of the silane coupling agents include γ-chloropropylmethoxysilane, vinyltriethoxysilane, vinyl-tris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropylmethoxysilane, γ-aminopropyltriethoxysilane, N-β-(aminoethyl)-γ-aminopropyltrimethoxysilane, trimethoxyacrylsilane. Preferred are vinyltris(β-methoxyethoxy)silane, γ-methacryloxypropyltrimethoxysilane, vinyltriacetoxysilane, trimethoxyacrylsilane. The silane coupling agents can be used singly, or in combination of two or more kinds. The content of the silane coupling agent is preferably in an amount of 5 to 20 parts by weight based on 100 parts by weight of the composite tungsten oxide.

The mean particle size of the solar control material used in the invention is preferably 10 to 800nm, especially 10 to 400nm in order to ensure transparency. This is because the small particles having particle size of 800nm or less do not completely shield light by scattering whereby visibility can be ensured in visual light region and at the same time transparency is effectively maintained. Particularly, in case transparency in visual light region is emphasized, it is preferred to consider scattering caused by particles. Therefore, when the reduction of the scattering of particles is emphasized, the particle size is preferably 20 to 200nm, especially 20 to 100nm.

The mean particle size of the solar control material is determined by observing a cross-section of the layer with a transmission-type electron microscope at approx. one million-fold magnification to measure diameters corresponding to circles of projected areas of at least a hundred of materials and calculating the number average value of the diameters.

The content of the (composite) tungsten oxide of the solar control layer is preferably in an amount of 10 to 500 parts by weight, further preferably 20 to 500 parts by weight, especially 30 to 300 parts by weight based on 100 parts by weight of the binder resin.

The solar control layer of the invention contains a binder resin in addition to the above-mentioned (composite) tungsten oxide. Examples of the binder resin include fluoro resin, silicone resin, olefin resin, acrylic resin, ethylene/vinyl acetate copolymer (EVA) and polyvinyl butyral (PVB). Of these resins, preferred are fluoro resin, silicone resin, olefin resin and acrylic resin, because they have excellent light resistance and reduced discoloration. Further in case these binders are used, the solar control layer is also configured preferably as a layer obtained by curing a resin composition comprising (composite) tungsten oxide and the binder resin. The resin can be used singly, or in combination of two or more kinds

Examples of the fluoro resin include polytetrafluoroethylene (PTFE), tetrafluoroethylene/hexafluoropropylene copolymer (FEP), tetrafluoroethylene/perfluoroalkyl vinylether copolymer (PFA), polyvinylidene fluoride (PVDF), polychlorotrifluoroethylene (PCTFE), tetrafluoroethylene/ethylene copolymer (ETFE), fluoroethylene vinyl ether resin (FEVE) and ethylene/chlorotrifluoroethylene copolymer (ECTFE), and polymer A having the following structure:

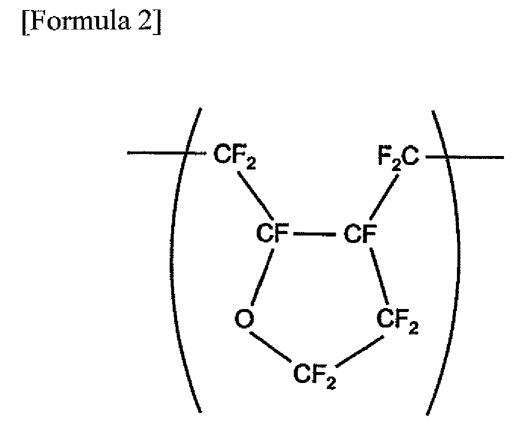

wherein n is 10 to 1,000. Of these resins, the polymer A and fluoroethylene vinyl ether resin (FEVE) are preferred. These (co)polymers may further have functional group(s) (e.g., alkoxysilyl group, hydroxyl group, amino group, imino group, (meth)acryloyloxy group, epoxy group, carboxyl group, sulfonyl group, acrylate-containing isocyanurate group, sulfate group). Examples of commercially available fluoro resin include Lumiflon (registered mark) available from Asahi Glass Co., Ltd., Cytop (registered mark) available from Asahi Glass Co., Ltd., Zeful (registered mark) available from Daikin Industries, Ltd., Optool (registered mark) available from Daikin Industries, Ltd.

Examples of the silicone resin include straight silicone varnish and modified silicone varnish. The straight silicone varnish is generally prepared by hydrolysis of phenyltrichlorosilane, diphenyldichlorosilane, methyltrichlorosilane or dimethyldichlorosilane. In case of using the varnish, it is coated and then cured at 100°C or higher. The modified silicone varnish is generally prepared by reacting silicone varnish with resin such as alkyd, polyester, acryl resin, epoxy resin. Preferred examples of commercially available silicon resin include silicone varnish KR series available from Shin-Etsu Chemical Co., Ltd.

Examples of the olefin resin include polyethylene, polypropylene and chlorinated polyethylene.

Examples of monomers of the acrylic resin include
alkyl (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, amyl (meth)acrylate, isoamyl (meth)acrylate, hexyl (meth)acrylate, heptyl (meth)acrylate, octyl (meth)acrylate, isooctyl (meth)acrylate, ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate;
hydroxyalkyl (meth)acrylates such as hydroxyethyl (meth)acrylate, 2-hydroxypropyl (meth)acrylate, 3-hydroxypropyl (meth)acrylate, 4-hydroxybutyl (meth)acrylate and 2-hydroxybutyl (meth)acrylate, 3-hydroxybutyl (meth)acrylate;
phenoxyalkyl (meth)acrylates such as phenoxyethyl (meth)acrylate and 2-hydroxy-3-phenoxypropyl (meth)acrylate;
alkoxyalkyl (meth)acrylates such as 2-methoxyethyl (meth)acrylate, 2-ethoxyethyl (meth)acrylate, 2-propoxyethyl (meth)acrylate, 2-butoxyethyl (meth)acrylate and 2-methoxybutyl (meth)acrylate;
polyalkylene glycol (meth)acrylates such as polyethylene glycol mono(meth)acrylate, ethoxydiethylene glycol (meth)acrylate, methoxypolyethylene glycol (meth)acrylate, phenoxypolyethylene glycol (meth)acrylate, nonylphenoxypolyethylene glycol (meth)acrylate, polypropylene glycol mono(meth)acrylate, methoxypolypropylene glycol (meth)acrylate, ethoxypolypropylene glycol (meth)acrylate and nonylphenoxypolypropylene glycol (meth)acrylate; and
pentaerythritol tri(meth)acrylate, pentaerythritol penta(meth)acrylate, dipentaerythritol hexa(meth)acrylate, and glycerol di(meth)acrylate.
As the acrylic resin, homopolymer of one of these monomers, copolymer of two or more of these monomers and copolymer of one or more of these monomers with other copolymerizable monomer(s) can be mentioned.

The solar control layer encompassing solar control material and a binder resin is a cured layer of a resin composition encompassing solar control material, a binder resin and if necessary an organic solvent. The solar control layer can be obtained, for example, by applying the resin composition onto a substrate such as a plastic film and drying it. In this case, the resin composition may further contain a curing agent such as polyisocyanate compound.

Further, the resin composition (encompassing solar control material and binder resin) used for forming the solar control layer may be thermosetting type or photo-curable type (generally UV-curable type). Hence, the resin composition may further contain thermopolymerization initiator, photopolymerization initiator. It is particularly preferred to contain the photopolymerization initiator.

The solar control layer may contain other dyes besides the (composite) tungsten oxide, if necessary. The dyes generally have absorption maximum in wavelength of 800 to 1200nm, and the examples include phthalocyanine dyes, metal complexes dyes, nickel dithioren complexes dyes, cyanine dyes, squalirium dyes, polymethine dyes, azomethine dyes, azo dyes, polyazo dyes, diimmonium dyes, aminium dyes, anthraquinone dyes. Preferred are cyanine dyes, phthalocyanine dyes, diimmonium dyes. These dyes can be employed singly or in combination.

The solar control layer preferably contains the dye in the amount of 0.1 to 20 part by weight, more preferably 1 to 20 part by weight, especially 1 to 10 part by weight based on the binder resin.

In the invention, a neon-emission absorption function may be given to the solar control layer such that the solar control layer has function for adjusting color hue. For this purpose, the solar control layer may contain a neon-emission selective absorption dye.

Examples of the neon-emission selective absorption dyes include cyanine dyes, squalirium dyes, anthraquinone dyes, phthalocyanine dyes, polymethine dyes, polyazo dyes, azulenium dyes, diphenylmethane dyes, triphenylmethane dyes. The neon-emission selective absorption dyes are required to have neon-emission selective absorption function at wavelength of approx. 585nm and small absorption in a wavelength range of visible light except the wavelength. Hence, the dyes preferably have absorption maximum wavelength of 575 to 595nm, and half bandwidth of absorption spectrum of 40nm or less.

Further, coloring materials (dye), ultraviolet absorbers, and antioxidants may be added to the solar control layer so long as those materials do not adversely affect the optical properties.

The thickness of the solar control layer preferably is in the range of 0.1 to 15µm, especially 3 to 10µm.

The solar control layer is preferably formed on a plastic film in view of easy preparation and excellent handling. Examples of the plastic film include polyethylene terephthalate (PET) film, polyethylene naphthalate (PEN) film, polyethylene butyrate film. Polyethylene terephthalate (PET) film is preferred. The thickness of the plastic film preferably is in the range of 10 to 400µm, especially 20 to 200µm. Further, the plastic film may be in advance subjected to adhesion treatment such as corona treatment, plasma treatment, flame treatment, primer coating treatment.

The preparation of the solar control layer encompassing a binder resin is carried out by applying the composition including a binder resin, solar control material and an organic solvent, etc., onto a predetermined substrate such as a plastic film or a transparent substrate and drying the applied film, and, if necessary, then curing it by heating or light irradiation using ultraviolet rays, X-ray, γ-ray or electron beam. The drying is preferably carried out by heating the resin composition applied onto the plastic film to 60 to 150°C, especially 70 to 110°C. The drying time generally is in the range of 1 to 10 minutes. The light irradiation is carried out by using ultraviolet rays emitted from a UV lamp such as super high-pressure, high-pressure, medium-pressure and low-pressure mercury lamps, or a metal halide lamp.

### [Solar Control Laminate]

The solar control laminate of the invention has the solar control layer containing tungsten oxide and/or composite tungsten oxide and at least one adhesive resin layer. The order to superpose these layers is generally determined depending on the use application of the solar control laminate.

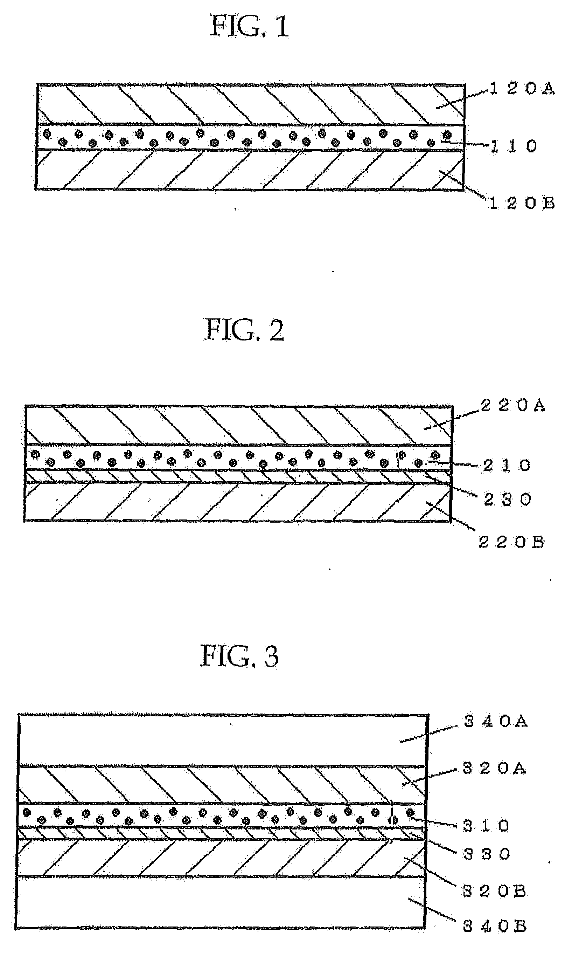

The solar control laminate of the invention is preferably used as an intermediate film for a solar control laminated glass. Hence, the solar control laminate preferably has a solar control layer and two adhesive resin layers, the solar control layer being arranged between the two adhesive resin layers. In the arrangement, other function layer(s) may be further arranged between optional two layers of these layers. The preferred structures of the solar control laminate of the invention are shown in Figs. 1 and 2.

A schematic section view of one preferable embodiment of the solar control laminate according to the present invention is shown in Fig. 1. The solar control laminate of Fig. 1 has a structure that a solar control layer 110 is interposed between two adhesive resin layers 120A, 120B.

A schematic section view of another preferable embodiment of the solar control laminate according to the present invention is shown in Fig. 2. The solar control laminate of Fig. 1 has a structure that a solar control layer 210 formed on a plastic film 230 is interposed between two adhesive resin layers 220A, 220B.

The solar control laminate of the invention is prepared, for example, by forming each layer according to the above-mentioned processes and then laminating the resultant layers in the predetermined order.

### [Solar Control laminated glass ]

The solar control laminate of the invention has a function to effectively shield heat-ray, and, in the solar control laminate, the deterioration caused by discoloration is highly suppressed and the excellent transparency is maintained for a long term period. Hence, the solar control laminate is preferably used in an intermediate layer for a laminated glass. Further the solar control laminate enables the provision of a solar control laminated glass.

The laminated glass using the solar control laminate of the invention has a structure that the solar control laminate, especially shown in Fig. 1 or 2, is interposed between two transparent substrates to be bonded to each other and united with each other.

The preferred embodiment of the solar control laminated glass is shown in Fig. 3. Fig. 3 is a schematic section view of a solar control laminated glass using the solar control laminate of Fig. 2. The solar control laminated glass of Fig. 3 has a solar control laminate having a structure that a solar control layer 310 formed on a plastic film 330 is superposed between two adhesive resin layers 320A, 320B. The solar control laminated glass is prepared by interposing this solar control laminate between two transparent substrates 340A, 340B, and bonding these to each other to be united.

The laminated glass using the solar control laminate of the invention can be prepared, for example, by interposing the solar control laminate between two transparent substrates to prepare a laminate, and bonding the resultant laminate under heating and pressure (thermocompression bonding). The bonding under heating and pressure brings about curing of the adhesive resin layer, which enables the function films and transparent substrates to be bonded and united.

The bonding under heating and pressure (thermocompression bonding) is carried out, for example, by bonding the resultant laminate under heating and pressure at temperature of 80 to 120°C in advance, and further heating it at temperature of 100 to 150°C (especially 130°C) for 10minutes to one hour. Moreover, the further heating may be carried out under pressure. The pressure preferably is in the range of 1.0×10³Pa to 5.0×10⁷Pa.

In the invention, the term "glass" of the solar control laminated glass means transparent substrates in general. Therefore the solar control laminated glass means those obtained by interposing the solar control laminate as an intermediate film between transparent substrates.

The transparent substrate used in the solar control laminated glass generally is, for example, glass plates such as silicate glass plate, inorganic glass plate and colorless transparent glass plate, and plastic films as well, though is not restricted to them. Examples of the plastic films include polyethylene terephthalate (PET) film, polyethylene naphthalate (PEN) film, polyethylene butyrate film. PET film is preferred. The thickness of the transparent substrate generally is in the range of 1 to 20mm.

The transparent substrates arranged on the both sides of the solar control laminated glass may be the same substrates or the combination of different substrates from each other. The combination of the substrates is preferably determined in view of the strength of the transparent substrates and the application use of the laminated glass.

### [Solar Control Glass]

Further, a laminate obtained by superposing the solar control laminate of the invention on one transparent substrate can be used as a solar control glass. The solar control glass can be prepared by laminating a solar control laminate having a solar control layer and an adhesive resin layer on one transparent substrate. The order to superpose these layers can be determined depending on the application use of the solar control glass. Another layer having other function may be provided between the above-mentioned layers (substrate) depending upon the application use of the solar control glass.

The transparent substrate used in the solar control glass can use the same substrate as in the solar control laminate mentioned above.

On the solar control laminate formed on the transparent substrate, a hard coat layer is preferably formed. The formation of the hard coat layer enables enhancement of handling, abrasion resistance, chemical resistance and humidity resistance.

The hard coat layer is a layer having hardness of H or higher that is determined by a pencil hardness test according to JIS 5600-5-4 (1999).

The hard coat layer is a cured layer of a synthetic resin composition encompassing as main component acrylic resin, epoxy resin, urethane resin or silicone resin. The thickness generally is in the range of 1 to 50µm, preferably 1 to 10µm. The synthetic resin composition generally is a thermosetting resin composition or an ultraviolet curable resin composition. The ultraviolet curable resin composition is preferred because it can be cured for a short time and hence shows excellent productivity.

The ultraviolet curable resin composition encompasses an ultraviolet curable monomer and/or oligomer (and /or polymer), a photopolymerization initiator, an organic solvent, etc. As these compounds, any known compounds that are used in a conventional hard coat layer can be used.

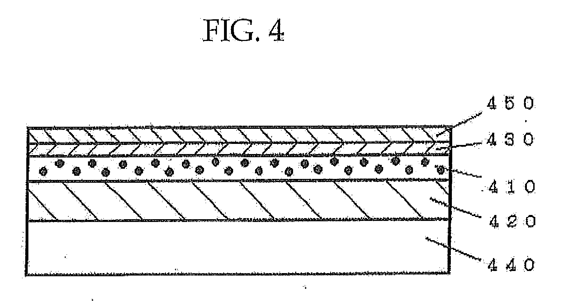

The one preferred embodiment of the solar control glass is shown in Fig. 4. In Fig. 4, a solar control laminate in which a solar control layer 410 formed on a plastic film 430 is disposed on an adhesive resin layers 420 is superposed on a transparent substrate 440, these being united. Further a hard coat layer 450 is formed on the plastic film 430.

In Fig. 4, the solar control layer 410 and the plastic film 430 are disposed on the adhesive resin layer 420 in this order. However, the plastic film 430 and the solar control layer 410 may be disposed on the adhesive resin layer 420 in this order. Moreover, the plastic film 430 may be omitted, if desired.

The solar control glass of Fig. 4 can be prepared by first forming a the solar control layer and if desired a hard coat layer on a plastic film, and separately preparing an adhesive resin layer, and then superposing the adhesive resin layer, the solar control layer, the plastic film and the hard coat layer on a transparent substrate, in this order, to prepare a laminate, and thereafter bonding the laminate under heating and pressure to cure the adhesive resin layer whereby these are bonded to each other and united.

The bonding under heating and pressure (thermocompression bonding) is carried out, for example, by bonding the resultant laminate under heating and pressure at temperature of 80 to 120°C in advance, and further heating it at temperature of 100 to 150°C (especially 130°C) for 10min, to one hour. Moreover, the further heating may be carried out under pressure. The pressure preferably is in the range of 1.0×10³Pa to 5.0×10⁷Pa.

The solar control laminated glass and solar control glass of the present invention can be used in a widow glass for building and vehicle (automobile, rail car, marine vessel), an electronic device such as a plasma display, and a door or wall portion of various devices such as refrigerator and thermal insulation system.

### EXAMPLE

The present invention is explained by Examples set forth below. The invention is not restricted to the Examples.

### [Example 1]

### 1. Preparation of solar control layer

A composition having the following components was applied onto a PET film (thickness: 100µm) with an applicator, dried, and exposed to UV light in integrated amount of light of 500mJ/cm² by using high-pressure mercury lamp. Thereby a solar control layer having thickness of 8µm was formed on the PET film.

| (Composition for forming solar control layer | |
|---|---|
| (part(s): part(s) by weight)) | |
| Pentaerythritol triacrylate | 100 parts |
| Irgacure 184 | |
| (available from Ciba specialty chemicals) | 4 parts |
| Cs_{0.33}WO₃ (mean particle size: 80nm) | 30 parts |
| Methyl isobutyl ketone | 100 parts |

### 2. Preparation of adhesive resin layer

A material having the following formulation was processed by calendaring to prepare an adhesive resin layer (thickness: 0.4mm) in the form of sheet. The kneading of the material was carried out at 80°C for 15 minutes, and the temperature of the calendar roll was 80°C and its processing rate was 5m/min.

| (Formulation of adhesive resin layer (parts: parts by weight)) | |
|---|---|
| EVA | |
| (content of vinyl acetate based on 100parts of EVA: 25 wt. %, | |
| Ultracene 635 available from Tosoh Corporation): | 100 parts |

| Crosslinker | |
|---|---|
| (t-butylperoxy-2-ethylhexyl monocarbonate; Trigonox 117 available from Kayaku Akzo Corporation): | 2.5 parts |
| Crosslinking auxiliary (triallyl isocyanurate; | |
| TAIC (registered mark) available from Nippon Kasei Chemical Co., Ltd.) | 2 parts |
| Silane coupling agent | |
| (γ-methacryloxypropyltrimethoxysilane; | |
| KBM503 available from Shin-Etsu Chemical Co., Ltd.): | 0.5 part |
| UV absorber (1) | |
| (2,2'-dihydroxy-4,4'-dimethoxybenzophenone, Uvinul 3049 available from BASF): | 0.15 part |
| Light stabilizer (1) | |
| (bis(2,2,6,6-tetramethyl-4-piperidyl)sebacate Tinuvin (registered mark) 770 available from Ciba Japan): | 0.2 part |

### 3. Preparation of solar control laminate and solar control laminated glass

The solar control layer formed on the PET film prepared above was inserted between the two adhesive resin layers prepared above to prepare a solar control laminate. The solar control laminate was further interposed between two glass plates (thickness: 3mm) to further prepare a laminate, which was temporarily bonded under pressure by heating at 100°C for 30 minutes, and then heated in an autoclave under pressure of 13×10⁵ at 140°C for 30 minute. Thereby, the adhesive resin layers were cured whereby a solar control laminated glass having the transparent substrates and the layers to be bonded and united was obtained (Fig. 3).

### [Examples 2 to 8]

In Examples 2, 3 and 5 to 8, the procedures of Example 1 were repeated except for changing the amounts of the ultraviolet absorber (1) and the light stabilizer (1) used in the adhesive resin layer to the amounts shown in Table 1 to prepare a solar control laminated glass.

In Example 4, the procedures of Example 1 were repeated except for using 0.2 part by weight of the light stabilizer (2) (bis(1,2,2,6,6-pentamethyl-4-piperidyl)sebacate; Tinuvin (registered mark) 765 available from Ciba Japan) instead of the light stabilizer (1) to prepare a solar control laminated glass.

### [Comparison Examples 1 to 4]

In Comparison Examples 1 to 4, the procedures of Example 1 were repeated except for changing the amount of the ultraviolet absorber (1) used in the adhesive resin layer to the amount shown in Table 1 and for using no light stabilizer (1) to prepare a solar control laminated glass.

### [Comparison Example 5]

In Comparison Example 5, the procedures of Example 1 were repeated except for changing the amount of the light stabilizer (1) used in the adhesive resin layer to the amount shown in Table 1 and for using no ultraviolet absorber (1) to prepare a solar control laminated glass.

### [Comparison Example 6]

In Comparison Example 6, the procedures of Example 1 were repeated except for using no ultraviolet absorber (1) and no light stabilizer (1) to prepare a solar control laminated glass.

### [Evaluation]

### 1. Light transmittance of adhesive resin layer

Light transmittance of the adhesive resin layer is measured at wavelengths of 300 to 700nm in the conditions of scanning rate of low level and sampling pitch of 1nm by using a spectral photometer (UV-4000 available from Shimadzu Corporation), whereby light transmittance at wavelength of 380nm is detected. The results are set forth in Table 1.

### 2. Color hue of laminated glass (initial stage)

Color hue of the solar control laminated glass is evaluated under fluorescent light by visual observation. The results are set forth in Table 1. In Table 1, "o" means that the color hue of laminated glass is colorless and transparent while "×" means that the color hue of laminated glass is yellow or blue and therefore not colorless and transparent.

### 3. Color hue of laminated glass after weather resistance

The solar control laminated glass is exposed to ultraviolet ray having wavelengths of 300 to 400nm and strength of 60W/m² at temperature of 63°C for 5000 hours by using an accelerated weathering machine (Xenon weather meter X75, available from Suga Test Instruments Co., Ltd.). The ultraviolet ray is exposed to the side that the solar control layer is formed (the glass substrate 340A of Fig. 3). Thereafter the color hue of the solar control laminated glass is determined as above. The results are set forth in Table 1. In Table 1, "○" means that the color hue of laminated glass is colorless and transparent without change of color hue while "×" means that the color hue of laminated glass is yellow or blue with change of color hue and therefore not colorless and transparent.

### [Table 1]

**[Table 1]**

| | | Ex. 1 | Ex. 2 | Ex. 3 | Ex. 4 | Ex. 5 | Ex. 6 | Ex. 7 | Ex. 8 | Co. Ex.1 | Co. Ex.2 | Co. Ex.3 | Co. Ex.4 | Co. Ex.5 | Co. Ex.6 |
|---|---|---|---|---|---|---|---|---|---|---|---|---|---|---|---|
| Formulation of adhesive resin layer (wt. parts) | EVA | 100 | 100 | 100 | 100 | 100 | 100 | 100 | 100 | 100 | 100 | 100 | 100 | 100 | 100 |
| | Crosslinker | 2.5 | 2.5 | 2.5 | 2.5 | 2.5 | 2.5 | 2.5 | 2.5 | 2.5 | 2.5 | 2.5 | 2.5 | 2.5 | 2.5 |
| | Crosslinking auxiliary | 2.0 | 2.0 | 2.0 | 2.0 | 2.0 | 2.0 | 2.0 | 2.0 | 2.0 | 2.0 | 2.0 | 2.0 | 2.0 | 2.0 |
| | Silane coupling agent | 0.5 | 0.5 | 0.5 | 0.5 | 0.5 | 0.5 | 0.5 | 0.5 | 0.5 | 0.5 | 0.5 | 0.5 | 0.5 | 0.5 |
| | Ultraviolet absorber (1)^{*1} | 0.15 | 0.5 | 1.0 | 0.15 | 0.05 | 0.75 | 0.5 | 0.5 | 0.15 | 0.5 | 1.0 | 1.2 | 0 | 0 |
| | Light stabilizer (1)^{*2} | 0.2 | 0.1 | 0.1 | 0 | 0.2 | 0.1 | 1.0 | 0.5 | 0 | 0 | 0 | 0 | 0.1 | 0 |
| | Light stabilizer (2)^{*3} | 0 | 0 | 0 | 0.2 | 0 | 0 | 0 | 0 | 0 | 0 | 0 | 0 | 0 | 0 |
| Evaluation | Light transmittance (380nm) [%] | 3.0 | 1.0 | 0.2 | 3.0 | 10.0 | 0.5 | 1.0 | 1.0 | 3.0 | 1.0 | 0.2 | 0.1 | 80.0 | 80.0 |
| | Color hue (initial stage) | ○ | ○ | ○ | ○ | ○ | ○ | ○ | ○ | ○ | ○ | ○ | ×(yell owing) | ○ | ○ |
| | Color hue (after weather resistance) | ○ | ○ | ○ | ○ | ○ | ○ | ○ | ○ | ×(bl uing) | ×(blui ng) | ×(blui ng) | ○ | ×(bl uing) | ×(bl uing) |

| | | | | | | | | | | | | | | | |
|---|---|---|---|---|---|---|---|---|---|---|---|---|---|---|---|
| Note) *1: 2,2'-dihydroxy-4,4'-dimethoxybenzophenone, Uvinul 3049 available from BASF *2: bis(2,2,6,6-tetramethyl-4-piperidyl)sebacate, Tinuvin (registered mark) 770 available from Ciba Japan *3: bis(1,2,2,6,6-pentamethyl-4-piperidyl)sebacate; Tinuvin (registered mark) 765 available from Ciba Japan | | | | | | | | | | | | | | | |

The results set forth in Table 1 indicate that the solar control laminated glass provided with the solar control laminate is highly suppressed in discoloration even after long-term ultraviolet exposure.

### Explanation of reference number

- 110, 210, 310:: Solar control layer
- 120A, 120B:: Adhesive resin layer
- 220A, 220B:: Adhesive resin layer
- 420:: Adhesive resin layer
- 230, 330, 430:: Plastic film
- 340A, 340B:: Transparent substrate
- 450:: Hard coat layer

## Claims

1. A heat-ray shielding laminate which comprises a solar control layer comprising tungsten oxide and/or composite tungsten oxide and at least one adhesive resin layer,
wherein the adhesive resin layer comprises an ultraviolet absorber, a light stabilizer and adhesive resin, and has light transmittance of not more than 10% at wavelength of 3 80nm.

2. A solar control laminate as defined in claim 1, wherein the adhesive resin layer contains the light stabilizer in the amount of 0.05 to 1.0 part by weight based on 100 parts by weight of the adhesive resin.

3. A solar control laminate as defined in claim 1 or 2, wherein the light stabilizer is a hindered amine light stabilizer.

4. A solar control laminate as defined in any of claims 1 to 3, wherein the adhesive resin layer contains the ultraviolet absorber in the amount of 0.01 to 2.0 part by weight based on 100 parts by weight of the adhesive resin.

5. A solar control laminate as defined in any of claims 1 to 4, wherein a ratio by weight of the light stabilizer to the ultraviolet absorber is in the range of 1:1 to 1:15.

6. A solar control laminate as defined in any of claims 1 to 5, wherein the ultraviolet absorber is a benzophenone ultraviolet absorber.

7. A solar control laminate as defined in any of claims 1 to 6, wherein the adhesive resin layer comprises ethylene-vinyl acetate copolymer as a binder resin.

8. A solar control laminate defined in any of claims 1 to 7, wherein the tungsten oxide is represented by a general formula W_{y}O_{z} wherein W represents tungsten, O represents oxygen, and y and z satisfy the condition of 2.2≤z/y≤2.999, and the composite tungsten oxide is represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3.

9. A solar control laminate as defmed in any of claims 1 to 8, wherein the solar control layer comprises at least one binder resin selected from fluoro resin, silicone resin, olefin resin and acrylic resin.

10. A solar control laminate as defined in any of claims 1 to 9, wherein the solar control laminate has two adhesive resin layers and the solar control layer is interposed between the two adhesive resin layers.

11. A solar control laminate as defined in any of claims 1 to 9, wherein the solar control laminate has two adhesive resin layers and the solar control layer which is formed on a plastic film is interposed between the two adhesive resin layers.

12. A solar control laminate as defined in claim 10 or 11, which is an intermediate layer for a solar control laminated glass.

13. A solar control laminated glass wherein the solar control laminate as defined in claim 10 or 11 is interposed between two transparent substrates, they being bonded to each other and united with each other.
